# EUROPEAN PATENT SPECIFICATION

(11) **EP 0 961 067 B1**
(45) Date of publication and mention of the grant of the patent: **02.02.2005**
(21) Application number: 99201255.9
(22) Date of filing: 20.04.1999
(51) Int. Cl.: F16K 37/00, E03C 1/05, E03C 1/04

(54) **Tap for delivering water at adjustable temperature, for sanitary appliances**
Hahn zum Abgeben von Wasser bei einer einstellbaren Temperatur, für Sanitärartikel
Robinet pour l'alimentation en eau à température ajustable, pour articles sanitaires

(30) Priority: 26.05.1998 IT RE980061
(43) Date of publication of application: 01.12.1999
(73) Proprietor: American Standard Europe B.V.B.A., 1160 Bruxelles (BE)
(72) Inventor: Pajetta, Giorgio, 20123 Milano (IT); Pajetta, Max, 20123 Milano (IT)
(74) Representative: Corradini, Corrado

(56) References cited:
- EP-A- 0 446 365
- EP-A- 0 738 356
- WO-A-99/57381
- DE-A- 4 324 512
- US-A- 5 095 941
- US-A- 5 868 311

## Description

This invention relates to taps for delivering water at adjustable temperature, for sanitary appliances; in particular it relates to the means for indicating the delivered water temperature to the user.

Taps have been known for some time in which the temperature of the delivered water is indicated, in a very empirical and approximate manner, by the position of the cold and hot water mixer lever.

To improve this situation, taps have been proposed comprising a display on which the temperature measured by a thermometer inserted in the path of the delivered water is indicated by numbers.

However this indication, although precise, is not immediately perceivable by the user. In this respect, after reading the value indicated on the display he has to mentally associate with said value the sensation which he expects the indicated temperature to provoke. This association is not generally immediate. In contrast, in the majority of cases the user has to carry out at least a small mental exercise to confirm, on the basis of his own remembered experience, whether the indicated value corresponds to the temperature he currently requires or not. Indeed, if the user is a child, it will be difficult for him to make the necessary association because his own experience is insufficient to decide, and hence the displayed information will be of no use to him (even if he were able to read it). In EP-A-0 738 356 a tap is shown for delivering water at a temperature adjustable on the basis of the distance of the user's hands from the tap, which comprises sensor means for determining the distance between the delivery mouth and the user's hands, means for regulating the temperature of the water reaching the tap delivery mouth, and
means for consequently controlling the water temperature regulating means depending on the distance values determined the sensor means and such that the temperature is different for different distances between the tap and the user's hands, and finally light emitting indicators of the temperature of the delivered water.

A drawback in the known taps is that, as is well known, the water cools while stationary in the pipes, hence the hot water leaves with a certain delay after the tap is opened. Hence the display indicates only the temperature of the water at that moment, and not the temperature which was set. For example if the user initially reads a relatively low temperature on the display, he may consider that the set temperature is likewise low, and may increase the set temperature, with the risk that when the outflow attains the set temperature, this temperature is excessively high.

An object of this invention is to provide a tap in which the delivered water temperature indication obtained by the user is more immediate and simple to perceive.

A further object of the invention is to provide an indication which effectively corresponds to the set temperature, even during the initial inertia period.

These and further objects are attained by the invention as characterised in the claim.

The invention is for a tap for the automatic delivery of hot and cold water on the basis of the distance of the user's hands from the tap delivery mouth, comprising:
a sensor means for determining the distance between the tap and the user's hands,
means for regulating the temperature of the water reaching the tap delivery mouth, and
means for processing the distance values determined by the sensor means and for consequently controlling the water temperature regulating means, such that the temperature is different for different distances between the tap and the user's hands.

According to the invention said processing means are arranged to activate or inhibit the light emitting means such that these provide an aggregate light which is of different colour for different distances between the tap and the user's hands, on the basis of the temperature set for the water by the regulating means.

In particular, said light emitting means are light emitting diodes (LEDs), there being provided a cap of a material through which light can diffuse to mix together the colours produced, and which covers said light emitting means from view.

When in use, the diodes provide a light which mixes in passing through the cap to produce a resultant light having a colour proportional to the temperature set for the water delivered by the tap. This colour is composed of the two base colours red and blue which, as is well known, are always associated in the human mind with the sensation of hot and cold respectively. Consequently the colour emitted by the diode group is immediately associated by the user with the temperature of the delivered water. Moreover the redder the colour, the higher the water temperature expected by the user, and vice versa for blue.

Consequently by virtue of the invention the set water temperature is indicated immediately to the user, without him having to use even the smallest mental force.

The invention is describe in detail hereinafter with the aid of the accompanying figures which illustrate a non-exclusive embodiment thereof.
Figure 1 is an overall schematic view of a tap for the automatic delivery of hot and cold water.
Figure 2 is an enlarged sectional view of a part of Figure 1.

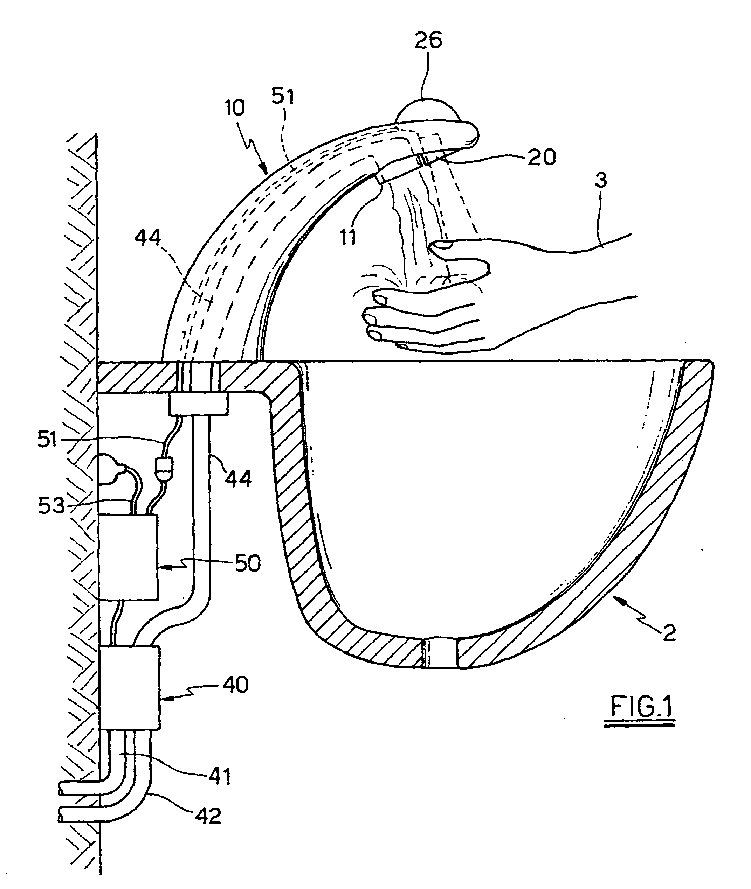

The tap of the invention, indicated overall by 10 and shown schematically in Figure 1, comprises a usual water delivery mouth 11 and is typically installed above a basin 2 (wash-basin) in which the delivered water is collected.

A typical (although not exclusive) application is for a type of tap for the automatic delivery of hot and cold water described in the invention patent application RE94A000095 of 8 November 1994. With the tap 10 there is associated a sensor means 20 for determining the distance of the user's hands 3 from the tap.

The sensor means 20 is positioned close to the delivery mouth 11 (as shown in Figure 1) and is directed towards the underlying basin 2.

The sensor means 20 can be of the infrared reflecting type, or can be formed using laser diodes or ultrasonic means.

The sensor means 20 is connected to processing means (contained in an electronic box 50) which process the distance values provided by the sensor means 20.

The processing means comprise a microcontroller which processes the information received from the sensor means 20 to execute the desired function.

The processing means act on means for regulating the temperature of the water fed to the delivery mouth 11, and incorporate software which controls these regulating means such that the delivered temperature is different for different distances of the hands 3 from the sensor 20.

Specifically, the regulating means comprise a group 40 of on-off solenoid valves (of known type), some connected to a pipe 41 feeding cold water to the tap, and others to a pipe 42 feeding hot water to the tap.

The outlets of the solenoid valves are all connected to a single outlet pipe 44 in which the water mixes to reach the mouth 11.

The group 40 is connected to the processing means positioned in the electronic box 50 and connected via an electronic cable 51 provided with a connector 52, to the sensor means 20. A current transformer is associated with the box 50 to reduce the voltage of the electric current originating from the mains via a cable 53.

The opening and closure of the solenoid valves is controlled by the microcontroller software in accordance with different combinations, with each of which there corresponds a respective mixture of hot and cold water having a respective temperature, all said temperatures being different from each other.

During use, the user places his hands below the mouth 11. The distance of his hands from the mouth 11 is determined by the sensor means 20 and is processed by the processing means which control the group 40 of solenoid valves in such a manner that the temperature is different for different distances between the tap and the user's hands.

For example the microcontroller operates by dividing the space below the mouth 11 into several sectors on the basis of the distance of the points of the sector from the tap mouth 11, and associating with each sector a delivered water temperature.

On placing the hands within that sector most distant from the mouth 11, this delivers water at "cold" temperature; on placing the hands within the sector closest to the mouth 11, this delivers water at "hot" temperature; finally on placing the hands within one of the intermediate sectors, the mouth 11 delivers water at a "tepid" temperature of greater or lesser intensity.

The user can hence control the water delivery and determine its temperature by simply placing his hands under the tap delivery mouth at the required distance and without touching any part of it.

The microcontroller software can be such as to cause the delivered water temperature to vary instantly as the distance of the hands from the mouth 11 varies.

Alternatively, the temperature determined by the presence of the hand in any one of the sectors can be made to remain constant for a predetermined time, even if the hand is moved into another sector.

According to another possible embodiment of the regulating means 40, these can comprise the use of valves of proportional type to mix hot water and cold water together; alternatively, electrical resistance elements can be provided immersed in the water flow directed to the mouth 11, and activated by the processing means such as to heat the delivered water to different temperatures.

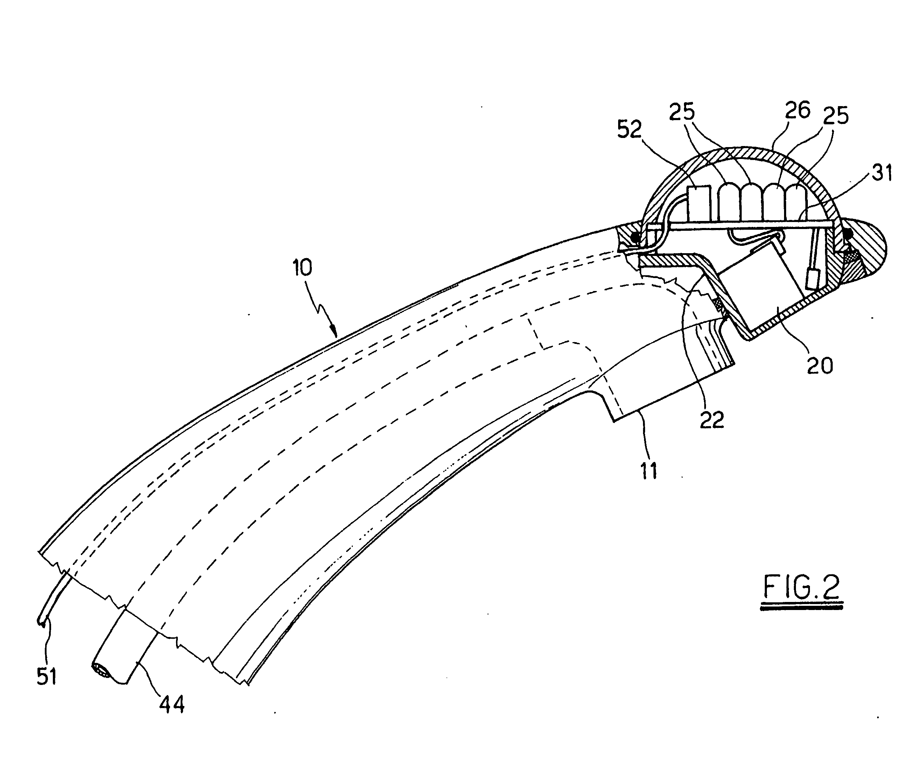

According to the invention, at least two light emitting means 25 are provided (four are shown in Figure 2) to supply a blue and red light respectively, they being located in a position visible to the user.

In a preferred embodiment, said means are light emitting diodes (LEDs). For example two diodes 25 are arranged to emit blue light, the other two being arranged to emit red light. In addition there is provided a cap 26 of a material through which light can diffuse, which covers said diodes from view, to mix together the colours produced by them.

Specifically, the diodes 25 are carried by a card 31 which is connected to the cable 51 via a connector 52. The same connector 52 also connects the sensor 20 to the cable 51. The diodes 25 and the relative card 31 are contained in a small container 22 positioned close to the tap mouth 11 and having its upper portion defined by the cap 26, which projects upperly beyond the surface of the tap. The sensor means 20 rests on the container base, which is transparent and faces downwards, beyond the lower surface of the tap.

In addition to controlling the means 40 such that the delivered temperature depends on the distance of the hands from the sensor 20, the processing means are arranged to activate or inhibit the light emitting diodes 25 such that they provide an aggregate light which is of different colour for different distances between the tap mouth 11 and the user's hands, so as to reflect the temperature set for the water.

For example, if the temperature of the water delivered by the mouth 11 is increased by moving the hands closer to the mouth, the diodes are activated in such a manner as to provide an aggregate light which is redder the shorter this distance (corresponding to a higher temperature), and vice versa.

In the example shown in the figures, four diodes are provided, of which two emit red light and two emit blue light. By activating and deactivating different combinations of diodes 25, five different colour combinations can be obtained, corresponding to five temperatures, as illustrated in the following table.

| **blue diode I** | **blue diode II** | **red diode I** | **red diode II** | **resultant colour** | **water temperature** |
|---|---|---|---|---|---|
| on | on | off | off | blue | cold |
| on | on | on | off | violet-blue | medium-cold |
| on | on | on | on | violet | medium |
| off | on | on | on | violet-red | medium-hot |
| off | off | on | on | red | hot |

A satisfactory colour system can be obtained even with only two diodes 25, as shown in the following stable.

| **blue diode** | **red diode** | **resultant colour** | **water temperature** |
|---|---|---|---|
| on | off | blue | cold |
| on | on | violet | medium |
| off | on | red | hot |

During use, the light emitted by the diodes 25 provides via the cap 26 a resultant light having a colour representative of the temperature set for the water delivered by the tap. This colour is composed of the two base colours red and blue which, as is well known, are always associated with a hot and cold sensation respectively. Consequently the colour emitted by the diodes 25 will be immediately associated, in the mind of the user, with the temperature of the delivered water. Moreover, the more this colour approaches red, the higher the water temperature expected by the user, and vice versa for blue.

Consequently, by virtue of the invention, the water temperature is immediately indicated to the user, without him having to make even the minimum mental effort.

Moreover, in the described tap for automatic hot and cold water delivery on the basis of the distance of the hands from the tap, the indication provided by the diodes 25 is independent of the usual thermal inertia of the water feed system. In this respect, as the temperature indicated depends on the distance of the hands from the sensor 20 and hence corresponds to the set temperature, rather than depending on the actual instantaneous water temperature, the temperature indicated corresponds effectively to the temperature of the water leaving the mouth 11 when under steady conditions.

## Claims

1. A tap for delivering water at a temperature adjustable on the basis of the distance of the user's hands from the tap, comprising:
a sensor means (20) for determining the distance between the delivery mouth (11) and the user's hands (3).
means (40) for regulating the temperature of the water reaching the tap delivery mouth (3), and
means (50) for processing the distance values determined by the sensor means (20) and for consequently controlling the water temperature regulating means (40), such that the temperature is different for different distances between the tap and the user's hands (3),
light emitting means (25) arranged to provide a light of blue and red colour respectively and located in a position visible to the user;
**characterised by** that said processing means (50) being arranged to activate or inhibit the light emitting means (25) such that these provide an aggregate light which is of different colour for different distances between the mouth (11) and the user's hands (3), in the sense of being redder the higher the set temperature, and bluer the lower the set temperature.

2. A tap as claimed in claim 1, **characterised by** comprising a cap (26) of a material which covers said light emitting means (25) from view, and through which light can diffuse to mix together the colours produced thereby.

3. A tap as claimed in claim 1, **characterised in that** said light emitting means (25) are light emitting diodes (LEDs).

## Patentansprüche

1. Wasserhahn zur Abgabe von Wasser mit einer Temperatur, die auf der Basis des Abstandes der Hände des Benutzers von dem Wasserhahn einstellbar ist, welcher Folgendes umfasst:
einen Sensor (20) zur Ermittlung des Abstandes zwischen der Abgabeöffnung (11) und den Händen (3) des Benutzers,
Mittel (40) zur Regulierung der Temperatur des Wassers, das die Abgabeöffnung des Wasserhahns (11) erreicht, und
Mittel (50) zur Verarbeitung der durch den Sensor (20) ermittelten Abstandswerte und zur nachfolgenden Steuerung der Mittel (40) zur Regulierung der Temperatur des Wassers, so dass die Temperatur für verschiedene Abstände zwischen dem Wasserhahn und den Händen (3) des Benutzers unterschiedlich ist,
Lichtausstrahlungsmittel (25), die dafür vorgesehen sind, ein Licht mit blauer beziehungsweise roter Farbe zu schaffen, und die an einer Position angeordnet sind, die für den Benutzer sichtbar ist;
**dadurch gekennzeichnet, dass**
die Mittel (50) zur Verarbeitung dafür vorgesehen sind, die Lichtausstrahlungsmittel (25) zu aktivieren oder zu hemmen, so dass diese ein kumuliertes Licht schaffen, das für verschiedene Abstände zwischen der Öffnung (11) und den Händen (3) des Benutzers von unterschiedlicher Farbe ist, in dem Sinne, dass es roter ist, je höher die eingestellte Temperatur ist, und blauer, je niedriger die eingestellte Temperatur ist.

2. Wasserhahn nach Anspruch 1,
**dadurch gekennzeichnet, dass**
er eine Kappe (26) aus einem Material umfasst, das den Lichtausstrahlungsmitteln (25) einen Sichtschutz gewährt, und durch das Licht gestreut werden kann, um die Farben, die dabei hergestellt werden, zusammenzumischen.

3. Wasserhahn nach Anspruch 1,
**dadurch gekennzeichnet dass**
die Lichtaussendungsmittel (25) Leuchtdioden (LEDs) sind.

## Revendications

1. Robinet destiné à distribuer de l'eau à une température réglable en fonction de la distance entre les mains de l'utilisateur et le robinet, comprenant :
un dispositif capteur (20) destiné à déterminer la distance comprise entre le bec de distribution (11) et les mains (3) de l'utilisateur,
un dispositif (40) de régulation de la température de l'eau atteignant le bec (3) de distribution du robinet, et
un dispositif (50) de traitement des valeurs de distance déterminées par le dispositif capteur (20) et à commander en conséquence le dispositif (40) de régulation de température de l'eau de manière que la température soit différente pour différentes distances entre le robinet et les mains (3) de l'utilisateur, et
des dispositifs photoémissifs (25) disposés afin qu'ils donnent de la lumière de couleur bleue et de couleur rouge respectivement et soient en position visible de l'utilisateur,
**caractérisé en ce que** le dispositif de traitement (50) est disposé afin qu'il active ou inhibe les dispositifs photoémissifs (25) d'une manière telle que ceux-ci donnent une lumière globale de couleur différente pour des distances différentes entre le bec (11) et les mains (3) de l'utilisateur, dans un sens tel que la couleur est d'autant plus rouge que la température de réglage est élevée et d'autant plus bleue que la température de réglage est basse.

2. Robinet selon la revendication 1, **caractérisé en ce qu'**il comprend un capuchon (26) d'un matériau qui recouvre les dispositifs photoémissifs (25) à la vue et à travers lequel la lumière peut diffuser pour mélanger les couleurs produites par ces dispositifs.

3. Robinet selon la revendication 1, **caractérisé en ce que** les dispositifs photoémissifs. (25) sont des diodes photoémissives (LED).
